Europäisches Patentamt

European Patent Office

Office européen des brevets

(19)

(11) Numéro de publication: **0 124 451**
**B1**

(12) **FASCICULE DE BREVET EUROPEEN**

(45) Date de publication du fascicule du brevet:
09.12.87

(51) Int. Cl.⁴: **C 08 L 77/00**, C 08 J 3/00

(21) Numéro de dépôt: **84420052.7**

(22) Date de dépôt: **20.03.84**

(54) Procédé de préparation de compositions de moulage à base de polyamides conventionnels et d'élastomères thermoplastiques.

(30) Priorité: 24.03.83 FR 8305086

(43) Date de publication de la demande:
07.11.84 Bulletin 84/45

(45) Mention de la délivrance du brevet:
09.12.87 Bulletin 87/50

(84) Etats contractants désignés:
AT BE CH DE GB IT LI LU NL SE

(56) Documents cités:
EP - A - 0 003 126
EP - A - 0 034 704

(73) Titulaire: **RHONE-POULENC CHIMIE, 25, quai Paul Doumer, F-92408 Courbevoie Cédex (FR)**

(72) Inventeur: **Miquel, Huguette, 6 Rue des Platanes, F-69630 Chaponost (FR)**
Inventeur: **Alliot-Lugaz, Maurice, 34 Rue de Baraban, F-69003 Lyon (FR)**

(74) Mandataire: **Trolliet, Maurice et al, RHONE-POULENC INTERSERVICES Service Brevets Chimie Centre de Recherches de Saint-Fons B.P. 62, F-69192 Saint-Fons Cédex (FR)**

ACTORUM AG

## Description

La présente invention concerne un procédé de préparation de compositions à base de polyamides conventionnels et d'élastomères thermoplastiques destinées à l'obtention d'objets moulés ayant d'excellentes propriétés de résilience à basse température.

Les polyamides et en particulier le nylon 6,6 (polymère d'hexaméthylènediamine et d'acide adipique) sont connus depuis longtemps pour leurs excellentes caractéristiques mécaniques, une très bonne résistance à la chaleur et à l'abrasion et aussi un excellent aspect de surface. Les polyamides moulés ont trouvé en conséquence de nombreuses applications dans les appareils et machines à usage domestique ou industriel, l'industrie électronique, les pièces d'automobile, les engrenages, etc. Toutefois, ces matières plastiques présentent une déficience en matière de résilience à température ambiante et surtout à basse température qui est de nature à freiner considérablement le développement des articles conformés dans certains marchés comme par exemple celui des pièces d'automobile.

Une grande variété d'additifs ont été ajoutés aux résines polyamides pour améliorer leur résilience. On citera par exemple: l'emploi de copolymères oléfiniques dérivant d'une α-oléfine aliphatique et d'au moins un composé appartenant à la classe des mono- ou diacides carboxyliques α, β-insaturés, des esters d'alkyles inférieurs et des anhydrides dérivés de ces acides (cf. notamment le brevet français n° 1 386 563 et la demande de brevet français n° 7 736 137 publiée sous le n° 2 372 202); l'emploi de copolymères oléfiniques contenant des groupes carboxyliques et/ou carboxylates et dérivant d'éthylène et d'au moins une autre α-oléfine (cf. notamment les brevets français n° 1 386 563 et 2 311 814); l'emploi encore de copolymères oléfiniques contenant des groupes carboxyles et/ou carboxylates et dérivant d'éthylène, d'au moins une autre α-oléfine et d'au moins un diène aliphatique (cf. notamment le brevet français n° 2 311 814). Cet art antérieur s'étend pratiquement à tous les nylons de masse moléculaire d'au moins 5 000 avec une préférence pour le nylon 6,6, le nylon 6 (polymère d'ε-caprolactame), le nylon 6,10 (polymère d'hexaméthylènediamine et d'acide sébacique), leurs mélanges et les copolyamides obtenus à partir des monomères de départ des polyamides précités.

Dans la demande de brevet européen n° 81 100 431.6 publiée sous le n° 0 034 704, on enseigne que l'emploi d'un mélange de nylon 6,6 et de nylon 6 en proportions déterminées est particulièrement recommandé pour obtenir, après ajout d'un élastomère renforçant pouvant appartenir à l'un ou l'autre des types précités, des articles moulés ayant une résilience à basse température la meilleure possible. Dans cette demande européenne, les différents ingrédients (nylon 6,6, nylon 6 et élastomère) sont mélangés directement à l'aide d'une extrudeuse à double vis. La technique décrite dans cet art antérieur ne présente cependant qu'un intérêt industriel limité. D'une part une extrudeuse à double vis est un appareillage encore peu répandu dans les unités de fabrication et d'autre part il est apparu que les bonnes propriétés annoncées ne peuvent être obtenues que si le mélange des ingrédients est réalisé sur ce type d'appareillage. On a constaté en effet que sur une simple extrudeuse monovis, qui est un appareillage courant, le mélange étant moins efficace, la résilience du mélange ternaire nylon 6,6/nylon 6/élastomère reste faible et très inférieure à celle de la même composition préparée, conformément aux indications de la demande européenne précitée, à l'aide d'une extrudeuse à double vis.

Poursuivant des travaux dans le domaine de la préparation de complexes constitués par une dispersion d'élastomère renforçant dans une matrice polyamidique, la demanderesse a maintenant trouvé une technique de préparation particulière qui offre, de manière inattendue, le double avantage d'une part de pouvoir permettre l'emploi d'une simple extrudeuse monovis pour assurer un mélange efficace des ingrédients et d'autre part de conduire à des polyamides renforcés qui possèdent une résilience supérieure à celle que l'on obtient en appliquant la technique antérieure via un mélange direct des ingrédients, en particulier en ce qui concerne la résistance au choc à basse température.

Un autre avantage lié à la mise en œuvre du présent procédé apparaîtra au cours de la description qui va suivre.

Plus précisément, la présente invention concerne un procédé de préparation de compositions constituées par une matrice polyamidique dans laquelle est dispersé, sous forme de particules dont le diamètre moyen est inférieur à 5 micromètres, au moins un élastomère thermoplastique de renforcement choisi dans le groupe constitué par:

(i)  des copolymères oléfiniques dérivant d'une α-oléfine aliphatique comportant de 2 à 6 atomes de carbone et d'au moins un composé appartenant à la classe des mono – ou diacides carboxyliques α, β insaturés comportant de 3 à 8 atomes de carbone, les esters d'alkyles inférieurs et les anhydrides dérivés de ces acides;

(ii)  des copolymères oléfiniques contentant des groupes carboxyles et/ou carboxylates et dérivant d'éthylène et d'au moins une α-oléfine ayant de 3 à 6 atomes de carbone;

(iii)  des copolymères oléfiniques contenant des groupes carboxyles et/ou carboxylates et dérivant d'éthylène, d'au moins une α-oléfine ayant de 3 à 6 atomes de carbone et d'au moins un diène aliphatique non conjugué comportant au moins 5 atomes de carbone;

(IVi)  des copolyesteramides obtenus à partir (α) de composés acides constitués d'une part par 1 à 100% en moles d'acides gras dimères ou leurs dérivés obtenus par polymérisation et fractionnement de monoacides aliphatiques saturés ou insaturés ayant de 8 à 24 atomes de carbone, la teneur en acides monofonctionnels de ces acides dimères étant inférieure à 1% en poids et de préférence à 0,2% en poids et leur teneur en acides de fonctionnalité supérieure à 2 étant inférieure à 5% en poids et de préférence à 3% en poids, et d'autre part par 99 à 0% en moles d'autres acides difonctionnels choisis parmi des diacides, des aminoacides, des hydroxyacides et leurs dérivés formateurs d'esters ou d'amides, (β) de composés dihydroxylés et (γ) de composés diaminés ou d'aminoalcools ou de mélanges de composés diaminés et d'aminoalcools, les composés (γ) pouvant être omis dans le cas où les composés acides (α) renferment déjà un réactif aminé;

(Vi) des mélanges en proportions variables de ces copolymères entre eux;

(VIi) et des mélanges d'au moins un des copolymères (i) (IVi) avec une polyoléfine ou une copolyoléfine présentant un module de flexion inférieur à 100 MPa,

ledit procédé étant caractérisé en ce qu'il comprend les étapes suivantes:

(a) on réalise d'abord un mélange-maître par dispersion du ou des élastomères dans un polyaminoacide obtenu soit par homopolycondensation directe d'acides ω-aminoalcanoïques comportant une chaîne hydrocarbonée ayant de 4 à 12 atomes de carbone, soit par ouverture hydrolytique et polymérisation des lactames dérivés de ces acides,

(b) puis on dilue ensuite ce mélange-maître par un polyamide, destiné à être renforcé, choisi dans le groupe constitué par: les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone; les copolyamides obtenus à partir des monomères de départ des polyamides précités, le composant acide de ces copolyamides pouvant consister en outre en partie en acide téréphtalique et/ou en acide isophtalique; et les mélanges de ces polyamides.

Un procédé de préparation de compositions polyamide/élastomère thermoplastique utilisant la technique du mélange-maître est déjà décrit dans la demande de brevet européen n° 791 000 557 publiée sous le n° 0 003 126. Mais il convient de noter que, dans cet art antérieur, le renfort élastomère consiste dans des copolymères acryliques ayant une structure du type coeur-peau, ne faisant pas partie des renforts envisagés par la demanderesse, qui sont incompatibles avec les polyamides de bas poids moléculaire.

Le mélange-maître issu de l'étape (a) du procédé selon la présente invention contient en général 30% à 70% en poids de polyaminoacide et 70% à 30% en poids d'élastomère(s). De manière préférentielle, il renferme 50% à 60% en poids de polyaminoacide et 50% à 40% en poids d'élastomère(s).

Dans l'étape (b), la quantité de mélange-maître qui est généralement utilisée, exprimée par le pourcentage en poids de mélange-maître dans la composition finale mélange-maître + polyamide à renforcer, est comprise entre 5% et 70%. De manière préférentielle, cette quantité est comprise entre 30% et 60% et, de manière plus préférentielle encore, entre 40% et 50%.

En mettant en œuvre de pareilles proportions d'ingrédients, on aboutit à des compositions finales dans lesquelles: d'une part, la quantité d'élastomère(s), exprimée par le pourcentage en poids d'élastomère(s) dans l'ensemble matrice polyamidique + renfort élastomérique, est comprise entre 1,5% et 50% et, de préférence, entre 12% et 30%; et d'autre part, la quantité de polyaminoacide servant à la confection du mélange-maître, exprimée par le pourcentage en poids dudit polyaminoacide dans l'ensemble des polyamides constituant la matrice, est comprise entre 1,5% et 62% et, de préférence, entre 17% et 47%.

En opérant sur une extrudeuse à double vis, l'adjonction directe d'un polyaminoacide, par exemple du nylon 6, dans les autres ingrédients, par exemple du nylon 6,6 et un élastomère, en respectant les proportions indiquées ci-avant, permet en conformité avec l'enseignement de la demande de brevet européen précitée publiée sous le n° 0 034 704 d'augmenter la résilience par rapport à celle d'une composition ne contenant que du nylon 6,6. On a trouvé que l'adjonction d'un polyaminoacide par la technique du mélange-maître selon l'invention apporte alors un gain supplémentaire de résilience de l'ordre de 5 à 15%.

Sur simple extrudeuse monovis, le mélange étant moins efficace, la résilience du mélange ternaire nylon 6,6/nylon 6/élastomère de même composition et préparé directement, reste faible comme on l'a déjà dit ci-avant et très inférieure à celle de la même composition préparée dans une extrudeuse à double vis. On a trouvé par contre que, dans le cas d'une extrudeuse monovis, l'adjonction de polyaminoacide dans les mêmes proportions en utilisant la technique du mélange-maître apporte une amélioration considérable de la résilience et le résultat obtenu est de manière totalement inattendue au moins égal à celui obtenu en utilisant la technique du mélange-maître et une extrudeuse à double vis.

L'emploi de la présente technique mettant en œuvre un mélange-maître apparaît clairement comme une mesure très avantageuse: d'une part elle permet de mettre en œuvre une extrudeuse monovis qui est plus répandue qu'une extrudeuse à double vis et d'autre part elle permet d'accéder aux propriétés des compositions réalisées par un mélange direct des ingrédients à l'aide d'une extrudeuse à double vis et même de les dépasser.

Dans ce qui précède, lorsque l'on parle à propos de la mise en œuvre de l'invention de mélange réalisé sur extrudeuse monovis ou double vis, on entend signifier que tous les mélanges, y compris le mélange-maître, sont réalisés sur l'appareil choisi. On fera remarquer cependent que l'emploi de deux appareils différents pour réaliser d'une part dans l'étape (a) le mélange-maître et d'autre part dans l'étape (b) le mélange final ne modifie en rien les valeurs de résilience.

En étudiant la variation de la résilience en fonction de la température, on a observé que les mélanges ternaires polyamide à renforcer/polyaminoacide/élastomère(s) préparés par la technique du mélange-maître, en opérant sur une extrudeuse monovis ou double vis, ont un comportement notamment à basse température qui est très sensiblement amélioré; c'est ainsi que, par exemple, les mélanges du type nylon 6,6 (nylon 6 - élastomère(s)) présentent une température de transition ductile-fragile qui est abaissée à une température inférieure de 15°C à 25°C à celle de la même composition préparée par mélange direct des ingrédients sur une extrudeuse double vis. La notion de rupture fragile ou ductile résulte d'une observation macroscopique du type de rupture d'une éprouvette soumise à un essai de résistance au choc. Si les deux moitiés de l'éprouvette se séparent et si l'énergie requise est faible, on est en présence d'une rupture fragile. Si les deux moitiés de l'éprouvette ne se séparent pas et si l'énergie requise est grande, on est en présence d'une rupture ductile. Entre ces deux cas extrèmes, on est en présence de ruptures qui sont d'abord ductiles puis fragiles et l'on dit que l'on se trouve dans la zone de transition ductile-fragile. De manière conventionnelle, on définira par température de transition ductile-fragile la température correspondant au point d'inflexion de la courbe donnant la variation de la résilience en fonction de la température.

A titre d'illustration des polyaminoacides qui peuvent convenir dans l'étape (a) du procédé selon l'invention, on citera: le nylon 4 (polymère d'acide amino-4 butanoïque ou de γ-butyrolactame), le nylon 5 (polymère d'acide amino-5 pentanoïque ou de δ-amylolactame), le nylon 6 (polymère d'ε-caprolactame), le nylon 7 (polymère d'acide amino-7 heptanoïque), le nylon 8 (polymère de capryllactame), le nylon 9 (polymère d'acide amino-9 nonanoïque), le nylon 10 (polymère d'acide amino-10 décanoïque), ly nylon 11 (polymère d'acide amino-11 undécanoïque), le nylon 12 (polymère d'acide amino- 12 dodécanoïque ou de laurolactame).

Les polyaminoacides auxquels on fait appel de préférence pour exécuter la présente invention sont les nylon 6, 7, 9 et 11. Les nylons 6 et 11 conviennent tout particulièrement bien.

Comme élastomères (i), on met en œuvre de préférence des copolymères dérivant d'éthylène et d'au moins un composé comprenant l'acide acrylique, l'acide méthacrylique, l'acide maléique, l'acide fumarique, l'acide itaconique, les esters d'alkyles inférieurs et les anhydrides dérivés de ces acides. La proportion du (ou des) composé(s) acide(s) (acide et/ou dérivé) contenue dans ces copolymères, exprimée en nombre de groupements COOH (ou en équivalents gramme COOH) par tonne d'élastomère, est comprise habituellement entre 10 et 250 et, de préférence, entre 30 et 120. A titre d'exemples de copolymères de ce type qui conviennent tout particulièrement bien, on citera: les copolymère éthylène-acide acrylique, éthylène-acide méthacrylique, éthylène-acide acrylique-méthacrylate de méthyle.

Comme élastomères (ii), on met en œuvre de préférence des copolymères dérivant d'éthylène et de propylène. L'introduction des groupes carboxyles et/ou carboxylates peut-être faite: soit par copolymérisation directe du mélange éthylène-$\alpha$-oléfine ayant de 3 à 6 atomes de carbone avec au moins un composé insaturé appartenant à la classe des diacides carboxyliques $\alpha$, $\beta$-insaturés comportant de 4 à 8 atomes de carbone (acide maléique, acide fumarique, acide itaconique), les esters d'alkyles inférieurs et les anhydrides dérivés de ces acides; soit par greffage du (ou des) composé(s) acide(s) (acide et/ou dérivé) sur la base oléfinique induit par ionisation, par hydroperoxydation ou sous l'effet de la chaleur et de la pression. De pareils copolymères présentent en général un pourcentage en poids d'éthylène, par rapport à l'ensemble éthylène + $\alpha$-oléfine, compris entre 20 et 95% et, de préférence, entre 50% et 80%, et la proportion du (ou des) composé(s) acide(s) (acide et/ou dérivé), exprimée en nombre de groupements acide carboxylique par tonne d'élastomère, est comprise habituellement entre 10 et 250 et, de préférence, entre 30 et 120. A titre d'exemples des copolymères de ce type qui conviennent tout particulièrement bien, on citera: les copolymères éthylène-propylène greffé anhydride maléique, éthylène-propylène greffé acide fumarique.

Comme élastomères (iii), on met en œuvre de préférence des copolymères dérivant d'éthylène, de propylène et d'un diène comme l'hexandiène-1,4, le norbornadiène-2,5, l'octadiène-1,7, l'éthylidène-5 norbornène. L'introduction des groupes carboxyles et/ou carboxylates est faite en traitant le mélange éthylène-$\alpha$-oléfine-diène de la manière indiquée ci-avant dans le cas du mélange éthylène-$\alpha$-oléfine. De pareils copolymères présentent en général un pourcentage en poids d'éthylène, par rapport à l'ensemble éthylène + $\alpha$-oléfine + diène, compris entre 20% et 95% et, de préférence, entre 50% et 80%; le pourcentage en poids du diène, par rapport à l'ensemble éthylène + oléfine + diène, est compris entre 0,1% et 5% et, de préférence, entre 0,5% et 2%, et la proportion du (ou des) composé(s) acide(s) (acide et/ou dérivé), exprimée en nombre de groupements acide carboxylique par tonne d'élastomère, est comprise habituellement entre 10 et 250 et, de préférence, entre 30 et 120. A titre d'exemple de copolymères de ce type qui conviennent tout particulièrement bien, on citera: les copolymères éthylène-prophylène-hexadiène-1,4 greffé anhydride maléique et éthylène-propylène-hexadiène-1,4 greffé acide fumarique.

Les copolyesteramides (IVi) qui peuvent être utilisés ici sont décrits dans la demande de brevet français n° 7 930 650 publiée sous le n° 2 471 394. On met en œuvre de préférence des copolyesteramides dans lesquels la proportion pondérale de motifs esters est comprise entre 50 et 80% en poids. Comme copolyesteramides de ce type qui conviennent bien, on citera les composés tels qu'ils sont obtenus aux exemples 1 à 10 de la demande française précitée.

Comme indiqué ci-avant, les élastomères qui peuvent convenir comprennent encore les mélanges d'au moins un des copolymères (i) à (IVi) précités avec une polyoléfine ou une copolyoléfine présentant un module en flexion inférieur à 100 MPa. Les polyoléfines considérées sont par exemple du polyéthylène basse densité ou des copolymères tels que ceux décrits ci-avant lors de la définition des élastomères (ii) et (iii) et servant de polymères de base sur lesquels sont greffés les groupes carboxyles et/ou carboxylates.

A propos des élastomères qui peuvent être mis en œuvre, on a constaté, et ceci constitue un autre avantage lié à la réalisation de la présente invention, qu'en effectuant un pré-mélange dans un polyaminoacide, l'influence sur les valeurs de la résilience des variations des proportions du (ou des) composé(s) acide(s) rentrant dans la constitution des copolymères (i), (ii) ou (iii) précités reste faible.

Les polyamides à renforcer visés dans l'étape (b) du procédé selon la présente invention comprennent: les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone; les copolyamides obtenus à partir des monomères de départ des polyamides précités, le composant acide de ces copolyamides pouvant consiste en outre en partie en acide téréphtalique et/ou en acide isophtalique; et les mélanges de ces polyamides.

A titre d'illustration des polyamides obtenus par polycondensation de diacides et de diamines, on citera par exemple: le nylon 6,6 (polymère d'hexaméthylènediamine et d'acide adipique), le nylon 6,9 (polymère d'hexaméthylènediamine et d'acide azélaïque), le nylon 6,10 (polymère d'hexaméthylènediamine et d'acide sébacique), le nylon 6,12 (polymère d'hexaméthylènediamine et d'acide dodécanedioïque).

A titre d'illustration des copolyamides, on citera par exemple: le nylon 6,6/6,10 (copolymère d'hexaméthylènediamine, d'acide adipique et d'acide sébacique).

Les polyamides à renforcer qui sont tout spécialement visés dans l'étape (b) du procédé selon la présente invention sont le nylon 6,6, le nylon 6,10 et le nylon 6,6/6,10.

Les compositions polymériques finales obtenues à l'issue de l'étape (b) du procédé selon l'invention peuvent contenir en outre un ou plusieurs additifs tels que par exemples: des inhibiteurs de dégradation par oxydation, par la chaleur ou par le rayonnement ultraviolet, des lubrifiants, des matières colorantes, des agents de nucléation, des plastifiants.

Les agents de stabilisation à l'oxydation et à la chaleur comprennent ceux utilisés généralement dans les polyamides. Ils comprennent par exemple, jusqu'à 1% en poids par rapport à la matrice polyamide (polyaminoacide de l'étape (a) + polyamide de l'étape (b)): des halogénures de métaux du groupe I, par exemple de sodium, de potassium, de lithium; des halogénures cuivreux par exemple, du chlorure, du bromure et de l'iodure cuivreux; des phénols stériquement empêchés; des hydroquinones; des phosphites organiques ou minéraux; et des combinaisons de ces divers composés.

Les agents de stabilisation à l'ultraviolet, utilisés par exemple dans une porportion allant jusqu'à 2% par rapport au poids de la matrice polyamide, peuvent aussi être ceux utilisés habituellement avec les polyamides. Comme exemples, on peut mentionner divers résorcinols substitués, salicylate, benzotriazoles, benzophénones, des amines aromatiques encombrées et des dérivés de pipéridines substituées.

On peut aussi utiliser des composés antioxydants de type connus comme les amines aromatiques substituées. Un exemple de tel composé est le 4,4'-bis (α-α' diméthylbenzyl) diphénylamine.

Des lubrifiants et agents de démoulage utilisables, dans une proportion allant jusqu'à 2% par rapport au poids de la composition finale, sont par exemple l'acide stéarique et ses sels minéraux, l'alcool stéarique, les stéréamides, les cires esters.

Des colorants organiques et des pigments comme par exemple le bioxyde de titane, le noir de carbone, peuvent être utilisés à des taux allant jusqu'à 5% par rapport au poids de la composition finale.

Les compositions finales peuvent aussi contenir des agents nucléants comme par exemple du talc, du fluorure de calcium, du phényl phosphinate de sodium, de l'alumine et du polytétrafluoroéthylène finement divisé et des agents plastifiants, dans des proportions allant jusqu'à environ 20% par rapport au poids de la composition, comme par exemple du phtalate de dioctyle, du phtalate de dibenzyle, du phtalate de butyle et de benzyle, des huiles d'hydrocarbures, du N,n-butylbenzène sulfonamide, de l'ortho et du para toluène-éthyl sulfonamide.

Les compositions polymériques finales obtenues à l'issue de l'étape (b) du procédé selon l'invention peuvent contenir encore un certain pourcentage d'une ou plusieurs charges minérales. Des propositions de charges minérales allant jusqu'à représenter 50% du poids des compositions finales peuvent être employées. Des charges qui peuvent être utilisées sont par exemple: du bioxyde de titane, des aluminosilicates (comme le kaolin), des magnésosilicates (comme le talc, la vermicutlie), les smectites, des micas, des fibres ou des billes de verre.

S'agissant des additifs précités, ils peuvent être incorporés sans inconvénient à un stade quelconque du procédé selon l'invention, c'est-à-dire au cours de l'étape (a) et/ou au cours de l'étape (b). S'agissant des charges minérales, elles sont incorporées de préférence au cours de l'étape (b).

Dans l'étape (a) du procédé selon la présente invention, on réalise le mélange des divers ingrédients (polyaminoacid + élastomère(s) + éventuellement additif(s)), en général sous forme de poudre ou granulés, en opérant d'abord à froid un mélange par un moyen technique classique, puis en homogénéisant ensuite l'ensemble par un malaxage à chaud dans une extrudeuse à une ou plusieurs vis et, de préférence, dans une extrudeuse monovis. A l'issue de ce traitement, on obtient des joncs qui sont refroidis à l'eau puis découpés en granulés, ces derniers, pouvant éventuellement être soumis ensuite à un séchage.

Dans l'étape (b) du procédé selon la présente invention, on procède à nouveau à un mélange à froid des divers ingrédients (mélange-maître + polyamide à renforcer + éventuellement additif(s) et/ou charge(s) minérale(s)), sous forme de poudre ou granulés, puis à une opération d'homogénéisation à chaud en travaillant dans une extrudeuse comportant de préférence une seule vis. A l'issue de l'étape (b), on obtient des compositions polymériques sous forme de joncs qui sont refroidis puis découpés en granulés comme indiqué ci-avant. Les granulés obtenus, éventuellement séchés, seront utilisés ultérieurement pour le formage des articles souhaités en opérant dans les appareils classiques de moulage par injection, par transfert ou par extrusion.

Le mode opératoire qui vient d'être décrit permet d'obtenir des compositions polymériques pour moulage dans lesquelles le ou les élastomères sont dispersés dans la matrice en polyamides sous forme de particules qui présentent dans leur intégralité un diamètre moyen inférieur à 5 micromètres et plus précisément compris entre 0,03 et 1,5 micromètres. Cette grande finesse de la dispersion d'élastomère(s) dans la matrice polyamidique finale, qui peut être obtenue de manière inattendue à l'aide d'une extrudeuse monovis malgré ses faibles performances de cisaillement, est l'une des raisons pour lesquelles on obtient d'excellentes propriétés de résistance au choc.

Les exemples non limitatifs qui suivent montrent comment la présente invention peut-être mise en œuvre pratiquement.

Exemples

Dans ces exemples, un certain nombre de contrôles des produits de départ et des compositions obtenues sont effectués. On indique ci-après les modes opératoires et/ou les normes selon lesquels ces contrôles sont effectués:

– Transition vitreuse:

La température de transition vitreuse correspond à la chute brutale du module de cisaillement en fonction de la température. Elle peut être déterminée sur le graphique représentant les variations du module de torsion en fonction de la température, variations mesurées par analyse thermomécanique au pendule de torsion automatique.

– Module en torsion:

Il est déterminé à quatre températures: 23°C, 0°C, –20°C et –30°C au pendule automatique de torsion sous une fréquence de l'ordre de 1 Hertz selon la norme ISO R 537. Les éprouvettes sont conditionnées à EHO, c'est-à-dire qu'elles sont placées en dessicateur sur silicagel et séchées 24 heures à température ambiante sous 0,66 – 1, 33.10$^2$ Pa avant de réaliser les mesures. Les résultats sont exprimés en MPa.

– Détermination des groupements terminaux sur polyamide:

$NH_2$: Dosage potentiométrique automatique de la solution de polymère dans le mélange phénol-eau 90/10 en poids par HCl. Le résultat est donné en équivalents gramme par tonne de polymère (éq.g/tonne).

COOH: Dissolution à chaud sous atmosphère d'azote du polymère dans l'alcool benzylique et dosage acidimétrique sous azote de cette solution chaude par une solution glycolique de potasse en présence de phénolphtaléine. Le résultat est donné en équivalents gramme par tonne de polymère.

– Determination du taux d'anhydride maléique greffé sur élastomère:

On opère une hydrolyse, puis une salification des fonctions carboxyliques en traitant l'élastomère greffé, en solution dans du toluène, à l'aide d'un excès d'hydroxyde de potassium alcoolique. L'hydroxyde de potassium n'ayant par réagi est dosé en retour par une solution titrée de HCl dans l'isopropanol en présence de phénolphtaléine. Le résultat est donné en nombre de groupements COOH (ou en équivalents gramme COOH) par tonne d'élastomère greffé.

– Module en flexion à EHO et à 23°C:

Cette détermination est faite sur des éprouvettes de types barreau de 100×10×4 mm selon la norme NFT 51 001. Les résultats sont exprimés en MPa.

– Résistance au choc CHARPY à EHO:

Elle est déterminée à différentes températures sur des éprouvettes de type barreau de 60×10×4 mm comportant des entailles en U selon la norme NFT 51 035. Les résultats sont exprimés en kJ/m$^2$.

Nous allons donner maintenant des précisions à propos de la nature des produits mis en œuvre dans ces exemples:

– Nylon 6,6 (polymère d'hexaméthylènediamine et d'acide adipique):

Il s'agit du produit mis dans le commerce par la Société RHONE-POULENC SPECIALITES CHIMIQUES sous la marque TECHNYL 50 AP; viscosité relative mesurée sur une solution à 8,4% en poids dans l'acide formique à 90% à 25°C: 50; groupements terminaux COOH: 75 éq.g/tonne; groupements terminaux $NH_2$:47 ég.g/tonne;

– Nylon 6 (polymère d' ε-caprolatame):

Il s'agit du produit mis dans le commerce par la Société BAYER sous la marque DURETHAN BK 31; groupements terminaux COOH:54 éq.g/tonne; groupements terminaux $NH_2$:47 éq.g/tonne;

– Nylon 11 (polymère d'acide amino-11 undécanoïque):

Il a été synthétisé par la demanderesse de manière connue en soi; groupements terminaux COOH:45 éq.g/tonne; groupements terminaux $NH_2$:54 éq.g/tonne;

– Copolymère éthylène-propylène-hexadiène-1,4 greffé anhydride maléique comportant une acidité correspondant à 74 éq.g/tonne de COOH (en abréviation' EPDMgAM-I):

Le réactif de départ est un copolymère éthylène-propylène-hexadiène-1,4 présentant une température de transition vitreuse de –52°C. Le taux d'éthylène, par rapport à l'ensemble éthylène + propylène + diène, est de 73% en poids et le taux de diène, par rapport au même ensemble, est de 1% en poids. Sa viscosité apparente à 280°C et de 13 000 poises pour un gradient de vitesse de 100 s$^{-1}$.

Ce copolymère est mélangé à l'état solide avec une quantité déterminée d'anhydride maléique en poudre en opérant dans un mélangeur de type MORITZ (vitesse de rotation: 14 tours/min; durée: 15 min).

On alimente avec le mélange précédent la trémie d'une extrudeuse monovis de marque SAMAFOR comportant une vis de diamètre D égal à 60 mm et de longueur égale à 35 D et équipée d'un puits de dégazage et on extrude le mélange.

Le greffage peut être effectué à l'aide d'un ou de deux passages dans l'extrudeuse. Les conditions opératoires correspondant à la réalisation d'un greffage en deux passages sont les suivantes:

– taux d'anhydride maléique introduit dans le mélangeur MORITZ: 0,65% par rapport au poids du copolymère de base;

– température des zones de chauffage et de la tête de l'extrudeuse: 300°C; débit: 11 kg/h; temps de séjour moyen: 2 min 25 s.

Le premier passage dans l'extrudeuse est effectué sans dégazage. Le produit extrudé obtenu est granulé, puis il est à nouveau extrudé en opérant cette fois un dégazage.

Le produit extrudé deux fois est granulé à son tour et ce sont ces granulés qui seront utilisés pour la mise en œuvre du procédé selon l'invention.

Le dosage de l'anhydride maléique fixé est effectué après élimination de l'anhydride maléique libre soit par traitement sous vide à 80°C pendant 36 h, soit par dissolution et reprécipitation du copolymère greffé obtenu. Le copolymère greffé présente, après hydrolyse des fonctions anhydrides, une acidité correspondant à 74 éq.g/tonne de COOH.

Un copolymère greffé comportant la même acidité peut être obtenu en réalisant un seul passage dans l'extrudeuse et un dégazage. Les conditions opératoires sont les suivantes;

– taux d'anhydride maléique: 0,5% par rapport au poids du copolymère de base;

– température des zones de chauffage et de la tête de l'extrudeuse: 340°C, débit; 10 kg/h; temps de séjour moyen: 2 min 35 s.

– Copolymère éthylène-propylène-hexadiè-ne-1,4 greffé anhydride maléique comportant une acidité correspondant à 35 éq.g/tonne de COOH (en abréviation: EPDMg AM-II):

Le copolymère de départ est le même que celui décrit précédemment. Les conditions de greffage sont aussi identiques, le seul paramètre qui est modifié étant le taux d'anhydride maléique mis en œuvre: il est de 0,4% en poids par exemple pour un greffage réalisé en deux passages dans l'extrudeuse.

– Copolymère éthylène-propylène greffé anhydride maléique (en abréviation: EPRgAM):

Le réactif de départ est un copolymère d'éthylène-propylène présentant une température de transition vitreuse de –55°C. Le taux d'éthylène, par rapport à l'ensemble éthylène + propylène, est de 67% en poids. Sa viscosité apparente à 280°C est de 6 400 poises pour un gradient de vitesse de 100 s$^{-1}$.

Le greffage souhaité peut être obtenu en réalisant deux passages dans l'extrudeuse SAMAFOR décrite ci-avant, le premier passage étant réalisé sans dégazage et le second passage étant réalisé avec dégazage. Les conditions opératoires sont les suivantes:

– taux d'anhydride maléique introduit dans le mélangeur MORITZ: 0.95% par rapport au poids du copolymère de base;

– température des zones de chauffage et de la tête de l'extrudeuse: 340°C; débit; 20 kg/h; temps de séjour moyen: 1 min 15 s.

Le copolymère greffé obtenu présente une acidité correspondant à 100 éq.g/tonne de COOH.

Pour un greffage réalisé en un seul passage dans l'extrudeuse,les conditions opératoires sont les suivantes:

– taux d'anhydride maléique introduit: 0,95% en poids,

– température des zones de chauffage et de la tête de l'extrudeuse: 350°C; débit: 28 kg/h; temps de séjour moyen: 55s.

Exemples 1 et 2 et essais comparatifs A et E.

1. Contenu de ces essais:

Dans ces essais, deux séries de compositions polymèriques vont être étudiées:

– première série, dans laquelle les divers mélanges sont réalisés à l'aide d'une extrudeuse double vis:

- essay A: nylon 6,6 (80% en poids) + EPDMgAM-I (20% en poids);
- essai B: nylon 6,6 (56% en poids) + nylon 6 (24% en poids) + EPDMgAM-I (20% en poids), en réalisant un mélange direct des ingrédients;
- exemple 1: nylon 6,6 + (nylon 6 + EPDMgAM-I), en préparant d'abord un mélange-maître nylon 6 (55% en poids) + EPDMgAM-I (45% en poids), puis en diluant ensuite ce mélange-maître par du nylon 6,6 de façon à obtenir une composition finale comprenant: 56% en poids de nylon 6,6, 24% en poids de nylon 6 et 20% en poids d'EPDMgAM-I;
- deuxième série, dans laquelle les divers mélanges sont réalisés à l'aide d'une extrudeuse monovis:
- essai C: nylon 6,6 (80% en poids) + EPDMgAM-I (20% en poids);
- essai D: nylon 6,6 (56% en poids) + nylon 6 (24% en poids) + EPDMgAM-I (20% en poids), en réalisant un mélange direct des ingrédients;
- essai E: nylon 6,6 + (nylon 6,6 + EPDMgAM-I), en préparant d'abord un mélange-maître nylon 6,6 (55% en poids) + EPDMgAM-I (45% en poids), puis en diluant ensuite ce mélange-maître par du nylon 6,6 de façon à obtenir une composition finale comprenant: 80% en poids de nylon 6,6 et 20% en poids d'EPDMgAM-I;
- exemple 2: nylon 6,6 + (nylon 6 + EPDMgAM-I), en préparant d'abord un mélange-maître nylon 6 (55% en poids) + EPDMgAM-I (45% en poids), puis en diluant ensuite ce mélange-maître par du nylon 6,6 de façon à obtenir une compoisiton finale comprenant: 56% en poids de nylon 6,6, 24% en poids de nylon 6 et 20% en poids d'EPDMgAM-I.

2. Conditions de réalisation des essais:
- Réalisation du mélange direct:
Le ou les polyamides et le copolymère greffé sont mélangés à l'état sec dans les proportions indiquées par passage dans un mélangeur de type MORITZ. Ce mélange est ensuite malaxé à l'état fondu dans une extrudeuse (monovis ou double vis) dont la trémie est placée sous courant d'azote. Les températures du fourreau de l'extrudeuse sont réglées au voisinage du point de fusion de la matrice polyamide. Le produit recueilli à la sortie de l'extrudeuse sous forme de jonc est refroidi dans un bain d'eau froide, puis il est découpé en granulés et séché sous vide pendant 12 heures à 80°C.

Dans le but de tester les propriétés des articles qui peuvent être obtenus à partir de pareils granulés, on procède à la fabrication d'éprouvettes par moulage par injection.

- Réalisation du mélange-maître et de sa dilution:
On réalise un mélange à sec, dans les proportions indiquées, du polyamide et du copolymère greffé par passage dans un mélangeur de type MORITZ. Ce mélange est ensuite extrudé à l'état fondu comme cela est décrit ci-avant dans le cas du mélange direct. La dilution des granulés de mélange-maître ainsi obtenus dans le polyamide qui va servir de support au mélange-maître va se faire à nouveau en opérant un mélange à froid, suivi d'un malaxage à l'état fondu dans une extrudeuse identique à celle mise en œuvre pour la confection du mélange-maître. Le jonc sortant de l'extrudeuse est une nouvelle fois refroidi, granulé et séché et on procède aux mesures des propriétés sur les éprouvettes moulées par injection.

- Matériel mis en œuvre:
Dans la première série d'essais, l'extrudeuse double vis utilisée est une extrudeuse de marque WERNER-PFLEIDERER, type ZSK 30, possédant 5 zones de malaxage.
La température du fourreau de l'extrudeuse et son débit de matière s'établissent dans les conditions de marche régulière comme suivant:

| Double vis: type de mélange | Température du fourreau °C | Débit matière kg/h |
|---|---|---|
| mélange direct (essais A et B) et dilution du mélange-maître (exemple 1) | 275–280 | 12 |
| réalisation du mélange-maître (exemple 1) | 240–245 | 7 |

La deuxième série d'essais à été réalisée en faisant appel, en premier lieu, à une extrudeuse de marque THORET comportant une vis de diamètre D égal à 20 mm et de longueur égale à 20 D et équipée de 5 zones de chauffage.
La température du fourreau de l'extrudeuse et son débit de matière s'établissent dans les conditions de marche régulière comme suivant:

| Monovis THORET: type de mélange | Température du fourreau °C | Débit matière kg/h |
|---|---|---|
| mélange direct (essais C et D) et réalisation du mélange-maître à base de nylon 6,6 (essai E) et dilution du mélange-maître (essai E et exemple 2) | zone 1:220 zones 2 à 4: 270–280 filière: 280 | 3 |

| Monovis THORET: type de mélange | Température du fourreau °C | Débit matière kg/h |
|---|---|---|
| réalisation du mélange-maître à base nylon 6 (exemple 2) | zone 1:130 zones 2 à 4: 250 filière: 250 | 3 |

Dans la deuxième série d'essais, les essais C et D et l'exemple 2 ont été reproduits en utilisant en deuxième lieu une extrudeuse de marque SAMAFOR comportant une vis de diamètre D égal à 60 mm et de longueur égale à 35 D et équipée de 6 zones de chauffage.

La température du fourreau de l'extrudeuse et son débit de matière s'établissent dans les conditions de marche régulière comme suivant:

| Monovis SAMAFOR: type de mélange | Température du fourreau °C | Débit matière kg/h |
|---|---|---|
| mélange direct (essais C et D) et réalisation du mélange-maître (exemple 2) et dilution du mélange-maître (exemple 2) | zone 1: 290 zones 2 à 5: 280 filière: 275 | 64 |

S'agissant des éprouvettes permettant de mesurer les propriétés des compositions obtenues, elles sont préparées à l'aide d'une presse à vis de la marque DK, type 60. Dans cette presse, les granulés sont fondus à une température de 280°C, tandis que le moule est maintenu à une température de 80°C; la pression d'injection est de 7 MPa; la durée du cycle d'injection est de 15 secondes.

3. Résultats des exemples 1 et 2 et des essais A à E:
– A température ambiante:
Les résultats de mesures de flexion et de choc réalisées à 23°C sont indiquées dans le tableau 1 suivant.

La demanderesse s'est livrée aussi à une observation de la taille des particules du copolymère greffé en microscopie électronique à transmission (cas des particules de diamètre inférieur à 5 micromètres) et en microscopie optique par observation en contraste de phase (cas des particules de diamètre supérieur à 5 micromètres). On trouvera dans le tableau précité l'indication d'une part du diamètre du plus grand nombre de particules et d'autre part du diamètre des grosses particules éventuellement présentes créant une irrégularité dans la dispersion.

| Exemple ou essai | Extrudeuse | Composition | Module en flexion à 23°C MPa | Résistance au choc CHARPY à 23°C kJ/m² | Etat de la dispersion | |
|---|---|---|---|---|---|---|
| | | | | | Diamètre en micromètre | Diamètre grosses particules en micromètre |
| A | double vis | nylon 6,6/EPDMgAM-I | 1800 | 42 | d ⩽ 1,6 | pas de grosses particules |
| B | double vis | nylon 6,6/nylon 6/EPDMgAM-I | 1600 | 45 | d ⩽ 1,3 | pas de grosses particules |
| 1 | double vis | nylon 6,6/(nylon 6-EPDMgAM-I) | 1650 | 51 | d ⩽ 0,4 | pas de grosses particules |
| C | monovis THORET | nylon 6,6/EPDMgAM-I | 1700 | 16 | d ⩽ 2 | 15 |
| D | | nylon 6,6/nylon 6/EPDMgAM-I | 1450 | 23 | d ⩽ 2 | 15 |
| E | | nylon 6,6/(nylon 6,6-EPDMgAM-I) | 1700 | 23 | d ⩽ 1,5 | 10 |
| 2 | | nylon 6,6/(nylon 6-EPDMgAM-I) | 1500 | 53 | d ⩽ 1,5 | 5 |
| C | monovis SAMAFOR | nylon 6,6/EPDMgAM-I | non mesuré | 13 | | |
| D | | nylon 6,6/nylon 6/EPDMgAM-I | non mesuré | 16 | | |
| 2 | | nylon 6,6/(nylon 6-EPDMgAM-I) | non mesuré | 53 | | |

En matière de résilience, il apparaît au vu du tableau 1 que:

- sur extrudeuse double vis, l'adjonction de nylon 6 de manière directe permet d'augmenter la résilience de 42 à 45 kJ/m² (comparaison des essais A et B). L'adjonction de nylon 6 par la technique du mélange-maître apporte un gain supplémentaire de 6 kJ/m² (comparaison de l'essai B et de l'exemple 1);

- sur extrudeuse monovis, le mélange étant moins efficace, la résilience du mélange binaire nylon 6,6/EPDMgAM-I reste faible (13 à 16 kJ/m²) et très inférieure à celle de la même composition préparée sur extrudeuse double vis (comparaison des essais A et C). L'adjonction de nylon 6 en mélange direct apporte une amélioration modérée (comparaison des essais C et D). Par contre l'incorporation de nylon 6 dans la même proportion en utilisant la technique du mélange-maître apporte une amélioration considérable: 53 kJ/m² au lieu de 16 à 23 kJ/m² (comparaison de l'essai D et de l'exemple 2). A noter que si l'on utilise le nylon 6,6 à la place du nylon 6 pour réaliser le mélange-maître la résilience obtenue reste assez faible (23 kJ/m²) (essai E).

- A basse température:

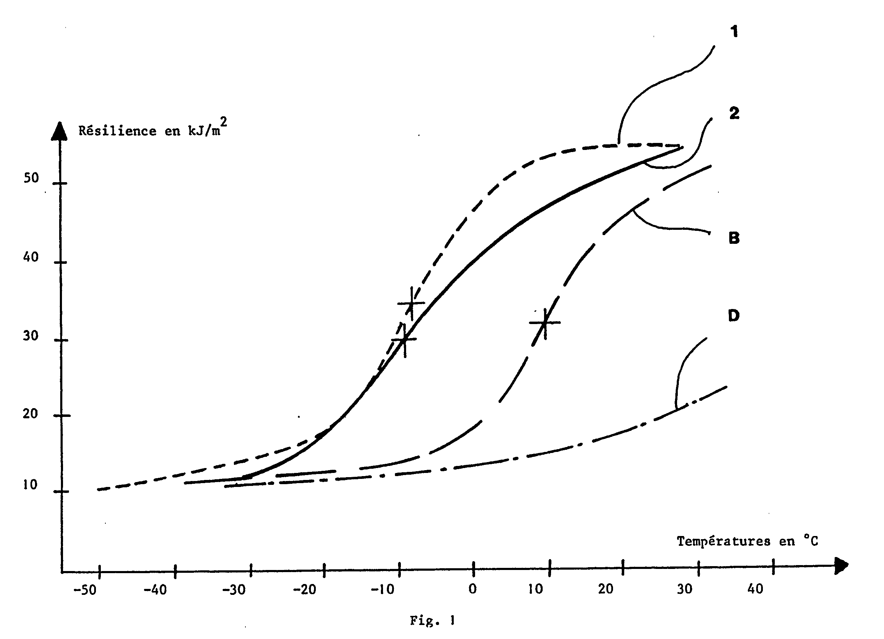

On a étudié la variation de la résilience en fonction de la température pour chacune des compositions correspondant aux essais B et D (monovis SAMAFOR et aux exemples 1 et 2 (monovis SAMAFOR). Les courbes obtenues sont portées sur la figure 1 donnée en annexe. Sur cette figure, la courbe 1 correspond à la composition de l'exemple 1, la courbe 2 correspond à la composition de l'exemple 2 (avec mélanges réalisés sur monovis SAMAFOR), la courbe B correspond à la composition de l'essai comparatif B et la courbe D correspond à la composition de l'essai comparatif D (avec mélanges réalisés sur monovis SAMAFOR). La température de transition ductile-fragile est repérée sur ces courbes par une croix.

La technique de mesure à basse température est celle de la norme NFT 51 035, la seule différence étant que les éprouvettes sont préalablement refroidies dans une enceinte thermostatée et maintenues à la température choisie sur l'appareil de mesure lui-même.

On peut observer que le mélange ternaire nylon 6,6/nylon 6/EPDMgAM-I réalisé de manière directe sur extrudeuse monovis (courbe D) présente une température de transition ductile-fragile qui est bien supérieure à 20°C. Le même mélange ternaire réalisé sur extrudeuse double vis (courbe B) est nettement supérieur, la température de transition ductile-fragile étant voisine de 10°C. Par contre, les mélanges ternaires préparés par la technique du mélange-maître sur extrudeuse double vis (courbe 1) et sur extrudeuse monovis (courbe 2) présentent une température de transition ductile-fragile qui est abaissée d'environ 20°C vers les basses températures: cette température se situe en effet vers environ –10°C.

Exemple 3

Dans cette exemple on formule une composition du type: nylon 6,6 + (nylon 11 + EPDMgAM-I) en préparant d'abord un mélange-maître nylon 11 (55% en poids) + EPDMgAM-I (45% en poids), puis en diluant ensuite ce mélange-maître par du nylon 6,6 de façon à obtenir une composition finale comprenant: 56% en poids de nylon 6,6, 24% en poids de nylon 11 et 20% en poids d'EPDMgAM-I.

Les conditions de réalisation de cet exemple sont celles décrites ci-avant. A noter que la réalisation du mélange-maître et sa dilution sont réalisées sur l'extrudeuse monovis THORET; la température du fourreau de l'extrudeuse et son débit de matière s'établissent dans les conditions de marche régulière comme suivant:

| type de mélange | Température du fourreau °C | Débit matière kg/h |
|---|---|---|
| réalisation du mélange-matière | zone 1: 130<br>zones 2 à 4: 250<br>filière: 250 | 3 |
| dilution du mélange-maître | zone 1: 220<br>zones 2 à 4: 270 à 280<br>filière: 280 | 3 |

Les caractèristiques déterminées sur éprouvettes sont les suivantes:
- module en flexion à EHO à 23°C:1400 MPa,
- résistance au choc CHARPY à EHO à 23°C:43 kJ/m₂.

Exemple 4 et essais comparatifs F et G.

On prépare les compositions suivantes, pour lesquelles les divers mélanges sont réalisés à l'aide de l'extrudeuse double vis WERNER-PFLEIDERER:

- essai F: nylon 6,6 (80% en poids) + EPRgAM (20% en poids);

- essai G: nylon 6,6 (56% en poids) + nylon 6 (24% en poids) + EPRgAM (20% en poids), en réalisant un mélange direct des ingrédients;

- exemple 4: nylon 6,6 + (nylon 6 + EPRgAM), en préparant d'abord un mélange-maître nylon 6 (55% en poids) + EPRgAM (45% en poids), puis en diluant ensuite ce mélange-maître par du nylon 6,6 de façon à obtenir une ocmposition finale comprenant: 56% en poids de nylon 6,6, 24% en poids de nylon 6 et 20% en poids d'EPRgAM.

Les conditions de réalisation de ces essais sont celles décrites ci-avant par les essais A et B et l'exemple 1.

Les caractéristiques déterminée sur éprouvettes sont rassemblées dans le tableau 2 suivant:

Tableau 2

| Exemple ou essai | Composition | Module en flexion à 23°C MPa | Résistance au choc CHARPY à 23°C kJ/m² |
|---|---|---|---|
| F | nylon 6,6/EPRgAM | 1455 | 45 |
| G | nylon 6,6/nylon 6/EPRgAM | 1600 | 47 |
| 4 | nylon 6,6/(nylon 6-EPRgAM) | 1600 | 51 |

Exemple 5 et essai comparatif H.

On prépare les compositions suivantes, pour lesquelles les divers mélanges sont réalisés à l'aide de l'extrudeuse double vis WERNER-PFLEIDERER:

– essai H: nylon 6,6 (80% en poids) + EPDMgAM-II (20% en poids);

– exemple 5: nylon 6,6 + (nylon 6 + EPDMgAM-II), en préparant d'abord un mélange-maître nylon (55% en poids) + EPDMgAM-II (45% en poids), puis en diluant ensuite ce mélange-maître par du nylon 6,6 de façon à obtenir une composition finale comprenant: 56% en poids de nylon 6,6, 24% en poids du nylon 6 et 20% en poids d'EPDMgAM-II.

Les conditions de réalisation de ces essais sont celles décrites ci-avant pour l'essai A et l'exemple 1.

Les caractéristiques déterminées sur éprouvettes sont rassemblées dans le tableau 3 suivant; dans ce tableau figurent également les résultats obtenus précédemment pour l'essai A et l'exemple 1.

Tableau 3

| Exemple ou essai | Composition | Taux de greffage du copolymère éq.g/tonne de COOH | Module en flexion à 23°C MPa | Résistance au choc CHARPY à 23°C kJ/m² |
|---|---|---|---|---|
| A | nylon 6,6/EPDMgAM-I | 74 | 1800 | 42 |
| H | nylon 6,6/EPDMgAM-II | 35 | 1750 | 27 |
| 1 | nylon 6,6/(nylon 6-EPDMgAM-I) | 74 | 1650 | 51 |
| 5 | nylon 6,6/(nylon 6-EPDMgAM-II) | 35 | 1600 | 49 |

On constate:

– que, lors d'une dispersion directe du copolymère EPDMgAM dans le nylon 6,6 le fait de diviser environ par 2 le taux de greffage du copolymère entraîne une chute de la résilience qui passe de 42 à 27 kJ/m² (comparaison des essais A et H);

– qu'en effectuant un prémélange du copolymère greffé dans du nylon 6, le fait de diviser environ par 2 le taux de greffage a par contre une influence très faible sur la résilience qui passe de 51 à 49 kJ/m² (comparaison des exemples 1 et 5).

**Revendications**

1) Procédé de préparation de compositions constituées par une matrice polyamidique dans laquelle est dispersé, sous forme de particules dont le diamètre moyen est inférieur à 5 micromètres, au moins un élastomère thermoplastique de renforcement choisi dans le groupe constitué par:

(i)      des copolymères oléfiniques dérivant d'une α-oléfine aliphatique comportant de 2 à 6 atomes de carbone et d'au moins un composé appartenant à la classe des mono- ou diacides carboxyliques α, β-insaturés comportant de 3 à 8 atomes de carbone, les esters d'alkyles inférieurs et les anhydrides dérivés de ces acides;

(ii)      des copolymères oléfiniques contenant des groupes carboxyles et/ou carboxylates et dérivant d'éthylène et d'au moins une α-oléfine ayant de 3 à 6 atomes de carbone;

(iii)      des copolymères oléfiniques contenant des groupes carboxyles et/ou carboxylates et dérivant d'éthylène, d'au moins une α-oléfine ayant de 3 à 6 atomes de carbone et d'au moins un diène aliphatique non conjugué comportant au moins 5 atomes de carbone;

(IVi) des copolyesteramides obtenus à partir (α) de composés acides constitués d'une part par 1 à 100% en moles d'acides gras dimères ou leurs dérivés obtenus par polymérisation et fractionnement de monoacides aliphatiques saturés ou insaturés ayant de 8 à 24 atomes de carbone, la teneur en acides monofonctionnels de ces acides dimères étant inférieure à 1% en poids et de préférence à 0,2% en poids et leur teneur en acides de fonctionnalité supérieure à 2 étant inférieure à 5% en poids et de préférence à 3% en poids, et d'autre part par 99 à 0% en moles d'autres acides difonctionnels choisi parmi des diacides, des aminoacides, des hydroxyacides et leurs dérivés formateurs d'esters ou d'amides, (β) de composés dihydroxylés et (γ) de composés diaminés ou d'aminoalcools ou de mélanges de composés diaminés et d'aminoalcools, les composés (γ) pouvant être omis dans le cas où les composés acides (α) renferment déjà un réactif aminé;

(Vi) des mélanges en proportions variables de ces copolymères entre eux;

(VIi) et des mélanges d'au moins un des copolymères (i) à (IVi) avec une polyoléfine ou une copolyoléfine présentant un module de flexion inférieur à 100 MPa,

ledit procédé étant caractérisé en ce qu'il comprend les étapes suivantes:

(a) on réalise d'abord un mélange-maître par dispersion du ou des élastomères dans un polyaminoacide obtenu soit par homopolycondensation directe d'acides ω-aminoalcanoïques comportant une chaîne hydrocarbonée ayant de 4 à 12 atomes de carbone, soit par ouverture hydrolytique et polymérisation des lactames dérivés de ces acides,

(b) puis on dilue ensuite ce mélange-maître par un polyamide, destiné à être renforcé, choisi dans le groupe constitué par: les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone; les copolyamides obtenus à partir des monomères de départ des polyamides précités, le composant acide de ces copolyamides pouvant consister en outre en partie en acide téréphtalique et/ou en acide isophtalique; et les mélanges de ces polyamides.

2) Procédé selon la revendication 1, caractérisé en ce que l'une part dans l'étape (a), le mélange-maître contient 30% à 70% en poids de polyaminoacide et 70% à 30% en poids d'élastomère(s) et d'autres part, dans l'étape (b), la quantité de mélange-maître, exprimée par le pourcentage en poids de mélange-maître dans la composition finale, est comprise entre 5% et 70%.

3) Procédé selon la revendication 2, caractérisé en ce que d'une part, dans l'étape (a), le mélange-maître contient 50% à 60% en poids de polyaminoacide et 50% à 40% en poids d'élastomère(s) et d'autre part, dans l'étape (b), la quantité de mélange-maître est comprise entre 30% et 60%.

4) Procédé selon l'une quelconque des revendications 1 à 3, caractérisé en ce que le polyaminoacide utilisé est choisi dans le groupe constitué par les nylons 6, 7, 9 et 11.

5) Procédé selon l'une quelconque des revendications 1 à 4, caractérisé en ce que le polyamide mis en œuvre dans l'étape (b) est choisi dans le groupe constitué par le nylon 6,6, le nylon 6,10 et le nylon 6,6/6,10.

6) Procédé selon l'une quelconque des revendicatios 1 à 5, caractérisé en ce que, dans l'étape (a) comme dans l'étape (b), on réalise le mélange des divers ingrédients, sous forme de poudre ou granulés, en opérant à froid un mélange par un moyen technique classique, puis en homogénéisant ensuite l'ensemble par un malaxage à chaud dans une extrudeuse à une ou plusieurs vis et de préférence dans une extrudeuse monovis.

7) Procédé selon l'une quelconque des revendications 1 à 6, caractérisé en ce qu'on utilise en outre, au cours de l'étape (a) et/ou au cours de l'étape (b), un ou plusieurs additifs choisis parmi des inhibiteurs de dégradation par oxydation, par la chaleur ou par le rayonnement ultraviolet, des lubrifiants, des matières colorantes, des agents de nucléation, des plastifiants.

8) Procédé selon l'une quelconque des revendications 1 à 7, caractérisé en ce que on utilise en outre, au cours de l'étape (b), une ou plusieurs charges minérales.

**Patentansprüche**

1. Verfahren zu Herstellung von Zusammensetzungen, bestehend aus einer Polyamid-Matrix, in die in Form von Teilchen mit einem mittleren Durchmesser unterhalb 5 Mikrometer wenigstens ein thermoplastisches Verstärkungselastomeres dispergiert ist, ausgewählt aus der Gruppe, bestehend aus:

(i) den olefinischen Copolymeren, die sich ableiten von einem aliphatischen α-Olefin mit 2 bis 6 Kohlenstoffatomen, und mindestens einer Verbindung, die zur Klasse der α,β-ungesättigten Mono- oder Dicarbonsäuren mit 3 bis 8 Kohlenstoffatomen gehört, den niederen Alkylestern und den Anhydriden, die sich von diesen Säuren ableiten;

(ii) den olefinischen Copolymeren mit Carboxyl- und/oder Carboxylatgruppen und stammend von Ethylen und mindestens einem α-Olefin mit 3 bis 6 Kohlenstoffatomen;

(iii) den olefinischen Copolymeren mit Carboxyl- und/oder Carboxylatgruppen und stammend von Ethylen, mindestens einem α-Olefin mit 3 bis 6 Kohlenstoffatomen und mindestens einem nicht-konjugierten, aliphatischen Dien mit mindestens 5 Kohlenstoffatomen;

(IVi) den Copolyesteramiden, erhalten ausgehend von (α) Säureverbindungen, bestehend ei-

nerseits aus 1 bis 100 Mol-% dimeren Fettsäuren oder ihren Derivaten, erhalten durch Polymerisation und Fraktionierung von gesättigten oder ungesättigten, aliphatischen Monosäuren mit 8 bis 24 Kohlenstoffatomen, wobei der Gehalt an monofunktionellen Säuren dieser dimeren Säuren unterhalb 1 Gew.% und vorzugsweise bei 0,2 Gew.% liegt und deren Gehalt an Säuren mit Funktionalität höher als 2 unterhalb 5 Gew.% und vorzugsweise bei 3 Gew.% liegt, und andererseits aus 99 bis 0 Mol-% anderer difunktioneller Säuren, ausgewählt unter den Disäuren, Aminosäuren, Hydroxysäuren und ihren Ester- oder Amidbildenden Derivaten, (β) Dihydroxylverbindungen und (γ) diaminierten oder Aminoalkohol-Verbindungen oder Gemischen von diaminierten und Aminoalkohol-Verbindungen, wobei die Verbindungen (γ) weggelassen werden können für den Fall, dass die Säureverbindungen (α) bereits eine aminierte Reaktionskomponente einschliessen;

(Vi) den Mischungen in variierenden Mengenverhältnissen dieser Copolymeren untereinander;

(Vii) und den Mischungen wenigstens eines der Copolymeren (i) bis (IVi) mit einem Polyolefin oder einem Copolyolefin, das einen Biegemodul unterhalb 100 MPa hat, wobei dieses Verfahren dadurch gekennzeichnet ist, dass es die folgenden Stufen umfasst:

(a) man bewirkt zunächst eine Vormischung (Masterbatch) durch Dispersion des oder der Elastomeren in einer Polyaminosäure, erhalten entweder durch direkte Homopolykondensation der ω-Aminoalkansäuren mit einer Kohlenwasserstoffkette mit 4 bis 12 Kohlenstoffatomen oder durch hydrolytische Öffnung und Polymerisation der Lactame, die sich von diesen Säuren ableiten;

(b) dass man dieses Vorgemisch mit einem Polyamid verdünnt, das dazu bestimmt ist, verstärkt zu werden, ausgewählt aus der Gruppe bestehend aus: den Polyamiden, erhalten durch Polykondensation von gesättigten, aliphatischen Dicarbonsäuren mit 6 bis 12 Kohlenstoffatomen mit gesättigten, aliphatischen, biprimären Diaminen mit 6 bis 12 Kohlenstoffatomen; den Copolyamiden, die erhalten sind aus den Ausgangsmonomeren der vorstehend erwähnten Polyamide, wobei die saure Verbindung dieser Copolyamide ausserdem zum Teil aus Terephthalsäure und/oder Isophthalsäure bestehen kann; und den Mischungen dieser Polyamide.

2. Verfahren gemäss Anspruch 1, dadurch gekennzeichnet, dass einerseits in der Stufe (a) das Vorgemisch 30 bis 70 Gew.% Polyaminosäure und 70 bis 30 Gew.% Elastomer(e) enthält und andererseits in der Stufe (b) die Menge an Vormischung, ausgedrückt in Gew.% der Vormischung in der Endzusammensetzung, zwischen 5% und 70% beträgt.

3. Verfahren gemäss Anspruch 2, dadurch gekennzeichnet, dass einerseits in Stufe (a) das Vorgemisch 50 bis 60 Gew.% Polyaminosäure und 50 bis 40 Gew.% Elastomer(e) enthält und andererseits in der Stufe (b) die Menge an Vormischung zwischen 30 und 60% liegt.

4. Verfahren gemäss einem der Ansprüche 1 bis 3, dadurch gekennzeichnet, dass die verwendete Polyaminosäure ausgewählt ist aus der Gruppe, bestehend aus den Nylons 6, 7, 9 und 11.

5. Verfahren gemäss einem der Ansprüche 1 bis 4, dadurch gekennzeichnet, dass das in der Stufe (b) eingesetzte Polyamid ausgewählt ist aus der Gruppe, bestehend aus Nylon 6,6, Nylon 6,10 und Nylon 6,6/6,10.

6. Verfahren gemäss einem der Ansprüche 1 bis 5, dadurch gekennzeichnet, dass man in der Stufe (a) ebenso wie in der Stufe (b) das Gemisch der verschiedenen Bestandteile in Form von Pulver oder Granulaten realisiert, indem ein Gemisch in der Kälte durch ein klassisches technisches Mittel verarbeitet wird und dann das Ganze homogenisiert wird durch ein Verkneten in der Hitze in einem Extruder mit einer oder mehreren Schnecken und vorzugsweise in einem Einschnecken-Extruder.

7. Verfahren gemäss einem der Ansprüche 1 bis 6, dadurch gekennzeichnet, dass man ausserdem im Verlauf der Stufe (a) und/oder im Verlauf der Stufe (b) einen oder mehrere Zusätze verwendet, ausgewählt unter den Inhibitoren für den Abbau durch Oxidation, durch Hitze oder durch ultraviolette Bestrahlung, den Schmiermitteln, färbenden Stoffen, Keimbildungsmitteln, Plastifizierern.

8. Verfahren gemäss einem der Ansprüche 1 bis 7, dadurch gekennzeichnet, dass man ausserdem im Verlauf der Stufe (b) einen oder mehrere mineralische Füllstoffe verwendet.

## Claims

1. Process for the preparation of compositions consisting of a polyamide matrix in which there is dispersed, in the form of particles whose average diameter is less than 5 micrometres, at least one thermoplastic reinforcing elastomer chosen from the group consisting of:

(i) olefinic copolymers derived from an aliphatic α-olefin containing from 2 to 6 carbon atoms and from at least one compound belonging to the class of the α,β-unsaturated mono- or dicarboxylic acids containing from 3 to 8 carbon atoms, the lower alkyl esters and the anhydrides derived from these acids;

(ii) olefinic copolymers containing carboxyl and/or carboxylate groups and derived from ethylene and from at least one α-olefin having from 3 to 6 carbon atoms;

(iii) olefinic copolymers containing carboxyl and/or carboxylate groups and derived from ethylene, from at least one α-olefin having from 3 to 6 carbon atoms and from at least one unconjugated aliphatic diene containing at least 5 carbon atoms;

(IVi) copolyesteramides obtained from (α) acid compounds consisting, on the one hand, of 1 to 100 mole% of dimeric fatty acids or their derivatives obtained by polymerization and fractionation of saturated or unsaturated aliphatic monoacids having from 8 to 24 carbon atoms, the content of monofunctional acids in these dimeric acids being less than 1% by weight and preferably less than 0.2% by weight, and their content of acids containing more than 2 functional groups being less than 5% by weight and preferably less than 3% by weight, and, on the other hand, of 99 to 0 mole% of other difunctional acids chosen from diacids, aminoacids, hydroxyacids and their derivatives forming esters or amides, (β) dihydroxy compounds and (γ) diamino compounds or aminoalcohols or mixtures of diamino compounds and aminoalcohols, it being possible for the compounds (γ) to be omitted in the case where the acid compounds (α) already contain an amino reactant;

(Vi) mixtures of these copolymers with one another in variable proportions;

(Vli) and mixtures of at least one of the copolymers (i) to (IVi) with a polyolefin or copolyolefin which has a flexural modulus lower than 100 Mpa, the said process being characterized in that it comprises the following steps:

(a) a masterbatch is first produced by dispersing the elastomer or elastomers in a polyaminoacid obtained either by direct homopolycondensation of ω-aminoalkanoic acids containing a hydrocarbon chain having from 4 to 12 carbon atoms, or by hydrolytic opening and polymerization of the lactams derived from these acids, and

(b) this masterbatch is then diluted with a polyamide, intended to be reinforced, chosen from the group consisting of: polyamides produced by polycondensation of saturated aliphatic dicarboxylic acids having from 6 to 12 carbon atoms with saturated aliphatic diprimary diamines having from 6 to 12 carbon atoms; copolyamides produced from the starting monomers of the abovementioned polyamides, it being additionally possible for the acid component of these copolyamides to consist partly of terephthalic acid and/or isophthalic acid; and mixtures of these polyamides.

2. Process according to Claim 1, characterized in that, on the one hand, in step (a), the masterbatch contains 30% to 70% by weight of polyaminoacid and 70% to 30% by weight of elastomer(s), and, on the other hand, in step (b), the quantity of masterbatch is between 5% and 70%, expressed as the percentage by weight of masterbatch in the final composition.

3. Process according to Claim 2, characterized in that, on the one hand, in step (a), the masterbatch contains 50% to 60% by weight of polyaminoacid and 50% to 40% by weight of elastomer(s), and, on the other hand, in step (b), the quantity of masterbatch is between 30% and 60%.

4. Process according to any one of Claims 1 to 3, characterized in that the polyaminoacid used is chosen from the group consisting of nylons 6, 7, 9 and 11.

5. Process according to any one of Claims 1 to 4, characterized in that the polyamide used in step (b) is chosen from the group comprising nylon 66, nylon 610, and nylon 66/610.

6. Process according to any one of Claims 1 to 5, characterized in that, in step (a) as in step (b), the mixture of the various ingredients, in the form of powder or granules, is produced by cold mixing by a conventional technical method and then by homogenizing the whole by hot kneading in a single-screw or multiscrew extruder and preferably in a single-screw extruder.

7. Process according to any one of Claims 1 to 6, characterized in that one or more additives, chosen from inhibitors of degradation by oxidation, by heat or by ultraviolet radiation, lubricants, colorants, nucleating agents and plasticizers, are also used during step (a) and/or during step (b).

8. Process according to any one of Claims 1 to 7, characterized in that one or more inorganic fillers are also used during step (b).

Fig. 1

0 124 451